# EUROPEAN PATENT SPECIFICATION

(11) **EP 3 301 962 B1**
(45) Date of publication and mention of the grant of the patent: **20.11.2019**
(21) Application number: 16290190.4
(22) Date of filing: 29.09.2016
(51) Int. Cl.: H04W 16/10, H04W 24/02, H04W 76/14, H04W 84/12, H04W 92/20

(54) **A PLATFORM AND METHOD FOR A SELF-OPTIMIZING WIRELESS NETWORK**
PLATTFORM UND VERFAHREN FÜR EIN SELBSTOPTIMIERENDES DRAHTLOSES NETZWERK
PLATE-FORME ET PROCÉDÉ POUR UN RÉSEAU SANS FIL À AUTO-OPTIMISATION

(43) Date of publication of application: 04.04.2018
(73) Proprietor: Alcatel Lucent, 91620 Nozay (FR)
(72) Inventor: PHILIPPART, Laurent, 2750-834 Cascais (PT)
(74) Representative: IP HILLS NV

(56) References cited:
- WO-A1-2016/050307
- US-A1- 2008 107 071
- XIANGPING QIN XINGANG GUO RANDALL BERRY: "SINR-based Channel Assignment for Dense Wireless LANs", WIRELESS NETWORKS, COMMUNICATIONS AND MOBILE COMPUTING, 2005 INTERNATI ONAL CONFERENCE ON MAUI, HI, USA 13-16 JUNE 2005, PISCATAWAY, NJ, USA,IEEE, vol. 1, 13 June 2005 (2005-06-13), pages 692-697, XP010888040, DOI: 10.1109/WIRLES.2005.1549491 ISBN: 978-0-7803-9305-9
- CHANG R Y ET AL: "Multicell OFDMA Downlink Resource Allocation Using a Graphic Framework", IEEE TRANSACTIONS ON VEHICULAR TECHNOLOGY, IEEE SERVICE CENTER, PISCATAWAY, NJ, US, vol. 58, no. 7, 1 September 2009 (2009-09-01), pages 3494-3507, XP011267367, ISSN: 0018-9545, DOI: 10.1109/TVT.2009.2014384

## Description

### Technical Field

The present disclosure relates to the field of allocating frequency channels to wireless access points in an environment with both managed and unmanaged wireless access points.

### Background

Wireless access points, APs, operating according to the IEEE 802.11 Wi-Fi standard, can operate within a selection of channels, each channel characterized by a certain frequency spectrum. If, however, neighbouring APs operate in a same or overlapping frequency spectrum, interference occurs, resulting in an overall decrease of performance due to contention and retransmission.

In order to optimize its throughput, an AP in an environment with multiple APs may therefore select a channel which exhibits the least interference in relation to channels used by neighbouring APs. For example, in Qin Xiangping, Guo Xinpang and Randall Berry in "SINR-based Channel assignment for send Wireless LANs", 2005 International Conference on Wireless Networks, Communications and Mobile Computing, Maui Hawaii, USA, 13-16 June 2005, Piscataway, NJ, USA, IEEE, vol. 1, 13 June 2005, pages 692-697, a model is disclosed that optimizes channel allocation for aggregate network throughput determined by a signal to interference ratio at each AP. Another method is disclosed in WO2016/050307A1 wherein through a first loop channels are allocated to APs by minimizing an amount of aggregated interference. Next, through a second loop it is checked whether allocating a different channel to an AP yields a lower aggregated amount of interference.

### Summary

Another way to select an optimal channel by an AP is through a selection process based on a scan by the AP of its environment from which information about an optimal channel is derived. This so-called local optimization approach does however not yield an optimum use of available frequency channels in an environment with multiple access points, since every AP in the environment locally optimize its performance, without optimizing the overall performance of the group of APs. In US2008/0107071A1 such a scan is used for populating a matrix comprising signal strength indicator, RSSI, values of all the APs in the environment. Next, by the use of a channel adjustment algorithm, channels are allocated. In Ronald Y. Chang, Zhifeng Tao, Jinyun Zhang, C.-C. Jay Kuo, IEEE Transactions on Vehicular Technology, Vol. 58, No. 7, September 2009, IEEE Service Center, Piscataway, NJ, US, vol. 58, no. 7, 1 September 2009, pages 3494-3507, "Multicell OFDMA Downlink Resource Allocation Using a Graphic Framework" a similar method is disclosed, wherein the matrix is replaced by a graphic framework.

It is an object of the present disclosure to alleviate the above drawback and to provide a solution for selecting a channel for an AP in an environment with multiple APs in an optimized way.

This object is achieved, according to a first aspect, by a platform for selecting wireless channels of wireless access points for which the wireless channels can be allocated by the platform, the manageable wireless access points, in an environment with the manageable wireless access points and wireless access points for which wireless channels cannot be allocate by the platform, the unmanageable wireless access points, the platform comprising a path loss module configured to determine path losses between each access point of the manageable and unmanageable wireless access points; characterized in that the platform further comprises a threshold module configured to determine a path loss threshold for which a largest subset of access points has a path loss less than the path loss threshold between each access point of the largest subset while the number of access points in the largest subset is greater than or equal to a predetermined value; an allocation module configured to allocate channels to the manageable access points in the largest subset, the first manageable access points, and, subsequently, to allocate channels to the manageable access points which are not in the largest subset, the other manageable access points.

Manageable APs are APs for which the channel can be allocated and thus changed by the platform, while unmanageable APs are APs for which the platform cannot change the channel. Each access point, both manageable by the platform and unmanageable but also operating in the environment, is mapped by the path loss module. The mapping is performed by determining path losses between each of the access points. The path losses are, for example, based on the received and transmitted power for each of the access points, wherein the difference between both measurements is calculated, and thereby obtaining path losses. Next, a threshold module will determine a path loss threshold such that a largest subset of access points has a path loss less than this threshold between each other access point of the same largest subset. The number of access points in this largest subset is greater than a predetermined value. Next, an allocation module will allocate channels to the manageable access points in this largest subset and, subsequently, allocate channels to all the other manageable access points in the environment.

By identifying the largest subset and next allocating channels to first manageable access points in this subset, the allocation process is first reduced to those first manageable access point which will potentially cause or suffer the most interference. In a next step, the allocation is continued for the other manageable access points. This subdivision leads to a global optimization of the allocation process where the APs that are suffering the most from interference indicated by the path loss module are allocated a channel first.

According to an embodiment, the system further comprises a feedback module configured to calculate a signal-to-noise-plus-interference ratio, SNIR, for an associated station, STA, of each unmanageable access point and the allocated first and other manageable access points, and to derive therefrom an adapted path loss threshold; and wherein the threshold module is further configured to update the largest subset according to the adapted path loss threshold; and wherein the allocation module is further configured to update the allocation of the channels to the updated largest subset and respective other manageable access points.

A feedback module will calculate a signal-to-noise-plus-interference ratio, SNIR, for one or more associated stations, STAs, of each access point based on the allocated channels and the channels used by the unmanageable access points. The signal-to-noise-plus-interference ratio, SNIR, also called the signal-to-interference-plus-noise ratio, SINR, gives an indication of the quality of wireless connections, wherein besides a path loss, background noise and interfering signals from other devices is taken into account. A SNIR for STAs connected to an access point is calculated wherein each possible STA position is considered and thus a coverage of the access points in the environment is determined. Based on the calculated SNIR, the feedback module will derive an adapted path loss threshold. If the adapted path loss threshold differs from the path loss threshold determined by the threshold module, the threshold module will utilize the adapted threshold in order to determine an updated largest subset and the allocation module will allocate channels to first manageable access points in this updated largest subset and respective other manageable access points. The feedback module also may calculate a SNIR for a STA, wherein a STA is located in any position of the environment. Hence a virtual STA is considered wherein this virtual STA is positioned in the environment and successively considered to be connected to each of the access points, wherein the feedback module continuously calculates a SNIR for each of the positions and connections.

Since a feedback module calculates a SNIR for a STA of each access point, and consequently an adapted path loss threshold, the effectiveness of the allocated channels is determined. Consequently, by net updating the largest subset, the channels are allocated in a more optimal way.

According to an embodiment, the feedback module is further configured to determine an amount of interference generated by each access point of the manageable and unmanageable wireless access points, wherein the amount of interference is based on a position of each access point and on a signal-to-noise-plus-interference ratio, SNIR, for an associated station, STA, of each access point, and wherein the adapted path loss threshold is based on the amount of interference.

The position of each access point may, for example, be determined using the International Telecommunication Union model for indoor attenuation. Thus combining the positions of access points and SNIRs for STAs connected to each of the access points, a global amount of interference for the total environment, that is the interference generated by each of the access points, is determined. Hence, the path threshold is further based on the amount of interference, and thus on the respective positions of a STA in relation to APs and the SNIR of that STA. Therefore, the path loss threshold is derived in a more precise way, since the interference in the environment and the effect of interference as seen by the STAs are both taken into account.

According to an embodiment, the feedback module is further configured to receive a signal-to-noise-plus-interference ratio, SNIR, of an associated station, STA, of each access point and to derive therefrom an adapted path loss threshold.

Besides calculating a SNIR for a STA of each access point, the feedback module is also configured to receive a SNIR of a STA. Thus, actual SNIRs may be used to determine an adapted path loss threshold.

According to an embodiment, the allocation module is further configured to allocate channels to the first manageable access points in order of decreasing degree of saturation, wherein the degree of saturation of a certain access point corresponds to the amount of other access points having allocated frequency channels and having a path loss less than the path loss threshold between the certain access point and each of the other access points.

In other words, the allocation of channels is not only subdivided per subset, but within the largest subset the allocation is performed such that an AP in the subset that potentially will cause or suffer most interference is allocated a channel first. This is done by identifying a manageable access point in the largest subset that has path losses with other access points, both belonging to the subset and not, which are less than the path loss threshold and wherein those other access point have allocated channels. This identified access point has a highest degree of saturation and is allocated a channel first. This results in the most freedom to allocate a channel to the most harmful AP in terms of interference.

According to an embodiment, the allocation module is further configured to allocate channels to access points of the first access points having an equal degree of saturation, according to a decreasing number of containing subsets, wherein the number of containing subsets of a certain access point corresponds to a number of subsets to which the certain access point belongs, wherein a subset corresponds to a set of access points having a path loss between each other less than the path loss threshold.

Obviously, two or more access points within the largest subset may have a same degree of saturation. Under this condition, access points of the largest subset are ranked according to a number of different subsets to which they belong, expressed as a number of containing subsets. A subset corresponds to a group or set of access point which all have path losses between each other access point within this group less than the path loss threshold. The access point with a highest number of containing subset is thus allocated a channel first. This again has the advantage that a channel is first allocated to the AP that is most harmful to other APs in terms of interference.

According to an embodiment, the allocation module is further configured to allocate channels to the first manageable access points having an equal degree of saturation and an equal number of containing subsets, according to a decreasing amount of interference between access points.

Since access points within the largest subset may have a same degree of saturation as well as a same number of containing subsets, an access point within the largest subset to which a channel is allocated first is the access point with the highest amount of interference. Thus, the access point which would cause the most interference is allocated a channel first.

According to an embodiment, the allocation module is further configured to allocate channels to the other access points according to a decreasing size of subsets to which the other access points belong, wherein a size of a subset to which a certain access point belongs corresponds to the number of access points in that subset of access points having a path loss less than the path loss threshold between each other.

If the first access points are all allocated a channel, the allocation module continues allocating channels to other manageable access points in the environment. The allocation is performed according to a decreasing size of subsets to which the other manageable access points belong. Such a size of a subset corresponds to the number of access points all having a path loss less than the path loss threshold between each other access point within the subset. Since the allocation procedure is performed in this decreasing order, access points which would cause most interference are allocated a channel first.

According to an embodiment, the predetermined value corresponds to a number of allowed wireless channels or to a number of non-overlapping allowed wireless channels to be allocated.

The allowed wireless channels correspond to allowed frequency bands, which may vary per region or per country, and/or supported by the access points. Non-overlapping allowed wireless channels are a subset of the allowed wireless channels, wherein their frequency spectrums don't overlap. Thus the number of access points in the largest subset is greater than or equal to the number of allowed channels or the number of non-overlapping allowed wireless channels. Hence, a largest subset of access points can be identified through the path loss threshold and such that the access points can either be allocated all a different channel or either reusing one or more channels.

According to an embodiment, the allocation module is further configured to allocate a selected channel out of a range of allowed wireless channels to each of the first access points, wherein a selected channel for a selected access point out of the first access points is the farthest from the other channels used by neighbouring access points, wherein the neighbouring access points are all access points with a path loss less than the path loss threshold.

In other words, a channel is allocated to an access point by determining which allowed channels are already used by other access points that have a threshold less than the path loss threshold. After the determination of these channels, a channel is allocated which has a frequency spectrum that is the farthest from the frequency spectrums used by the neighbouring access points. Hence, a channel is allocated which will exhibit the least interference.

According to an embodiment, the allocation module is further configured to allocate a selected channel out of a range of allowed wireless channels to an access point, wherein, when all allowed channels are used by neighbouring access points, the channel of a neighbouring access point with the smallest amount of interference is selected, wherein the neighbouring access points are all access points with a path loss less than the path loss threshold.

If neighbouring access points of an access point are allocated channels such that no allowed channels, overlapping or not, which is the farthest away may be selected, the allocation module select a channel which causes the least amount of interference.

According to a second aspect the disclosure relates to a method for selecting wireless channels of wireless access points for which the wireless channels can be allocated, the manageable wireless access points, in an environment with the manageable wireless access points and wireless access points for which wireless channels cannot be allocated, the unmanageable wireless access points, the method comprising determining path losses between each access point of the manageable and unmanageable wireless access points; characterized in that the method further comprises the steps of determining a path loss threshold for which a largest subset of access points has a path loss less than the path loss threshold between each access point of the largest subset while the number of access points in the largest subset is greater than or equal to a predetermined value; and allocating channels to the manageable access points in the largest subset, the first manageable access points, and, subsequently, allocating channels to the manageable access points which are not in the largest subset, the other manageable access points.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates an environment with manageable and unmanageable wireless access points according to an embodiment of the disclosure;
Fig. 2 illustrates a platform for selecting wireless channels of manageable wireless access points according to an embodiment of the disclosure;
Fig. 3 illustrates a graph representing access points and path losses according to an embodiment of the disclosure;
Fig. 4 illustrates a graph and a largest clique according to an embodiment of the disclosure;
Fig. 5 illustrates a graph and a second largest clique according to an embodiment of the disclosure; and
Fig. 6 illustrates a clique and path losses according to an embodiment of the disclosure.

### Detailed Description of Embodiment(s)

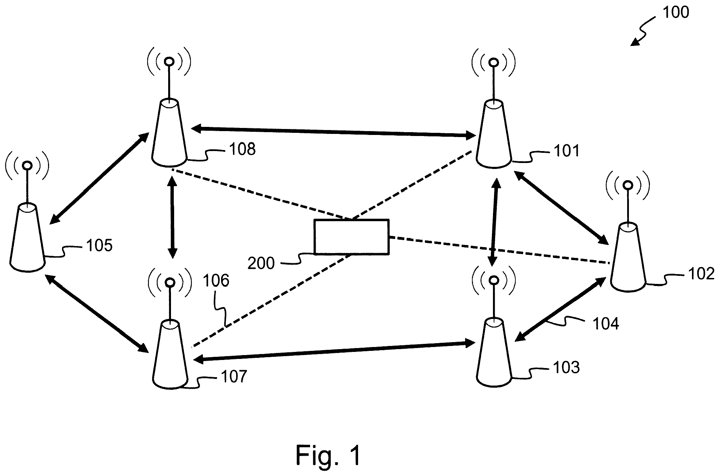

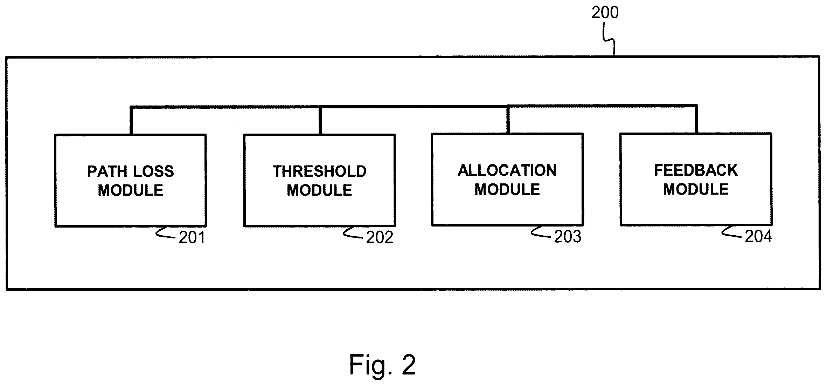

According to an embodiment, the disclosure relates to a platform for selecting wireless channels of manageable wireless access points in an environment with manageable and unmanageable wireless access points. Figure 1 illustrates such an environment and figure 2 illustrates such a platform. The environment 100 comprises a platform 200 and different access points 101, 102, 103, 105, 107 and 108. The platform 200 is connected to access points 101, 102, 107 and 108, while the access points 103 and 105 are not connected to the platform 200. The connection of the platform 200 to one of the access point, like for example the connection 106 between the platform 200 and the access point 107 can be wired and/or wireless.

The access points that are connected to the platform 200, i.e. 101, 102, 107 and 108, are manageable access points. The platform 200 may select channels to be allocated to those access points. The other access points 103 and 105 are unmanageable access points operating in the environment 100 as well. According to an embodiment, the platform 200 comprises a path loss module 201 configured to determine path losses between the access points in the environment 100. The path losses, illustrated by a path loss 104 between access points 102 and 103, are, for example, determined, according to an embodiment, on received and transmitted power of the access points.

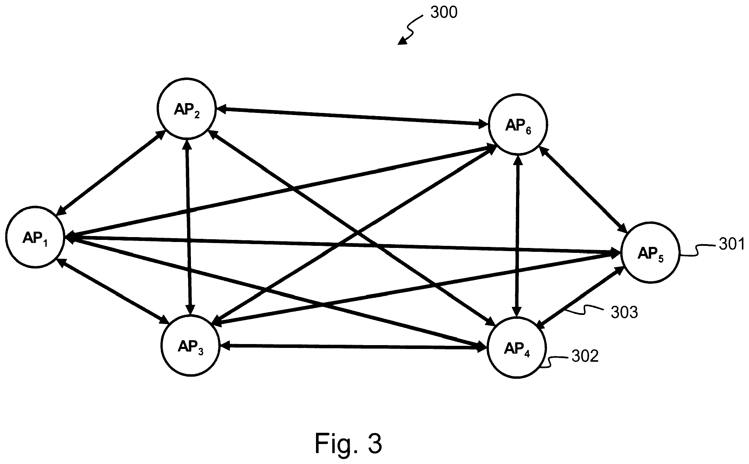

Each access point in the environment 100 and the determined path losses between the access points may also be presented as a graph with edges and vertices. Figure 3 is an illustration of such a graph. The access points correspond to the vertices in the graph 300 and the path losses to the edges connecting the vertices. Vertex 301, for example, corresponds to access point 102 and vertex 302 to access point 103 in the environment 100

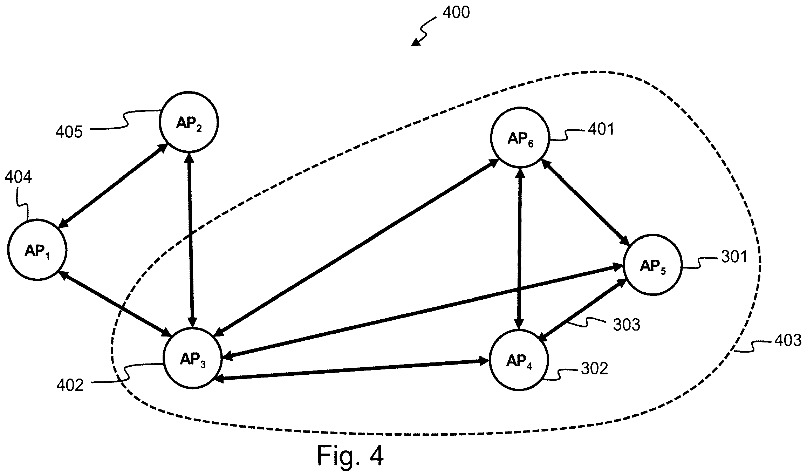

The path losses determined by the path loss module 201 of the platform 200 are presented by edges in the graph 300, such as edge 303 connecting vertices 301 and 302. According to an embodiment of the disclosure, the platform 200 further comprises a threshold module 202, configured to determine a path loss threshold for which a largest subset of access points has a path loss less than the path loss threshold between each access point of the largest subset while the number of access points in the largest subset is greater than or equal to a predetermined value. In other words, the path loss threshold indicates which path losses between each of the access points are considered to determine a subset of access points. According to the graph theory, this corresponds to removing edges between vertices. Figure 4 is an illustration of such a graph, wherein path losses corresponding to edges which are removed if they are less than the path loss threshold. The predetermined value can, according to an embodiment, for example correspond to a number of allowed wireless channels within a region or country or to non-overlapping allowed wireless channels or to a number of supported channels by the access points.

In the graph 400 in Fig. 4 access points 101 and 107 are represented by vertex 401 respectively vertex 402. The threshold module 202 further determines a largest subset of access points based on a path loss threshold. This subset, for example, corresponds to the subset of access point 101, 102, 103 and 107 and presented as 403 in graph 400 comprising vertices 301, 302, 401 and 402. According to the graph theory this largest subset corresponds to the largest clique in the graph 400. Next, the platform 200 comprises an allocation module 203 configured to allocate channels to manageable access points within this largest subset or clique 403. Since access point 103 is an unmanageable access point, channels are allocated to access points 101, 102 and 107.

The allocation of channels may, according to an embodiment of the disclosure, be performed in order of decreasing degree of saturation. The degree of saturation of an access point corresponds to the amount of other access points having a path loss less than the path loss threshold and each of the other manageable access point, having allocated channels for manageable access points or operating through channels for unmanageable access points. Thus, if for example none of the manageable access points 101, 102, 107 and 108 in the environment 100 have allocated channels, the access point 107, corresponding to vertex 402 in graph 400, has a degree of saturation of two, since access points 103 and 105 have a path loss with access point 107 less than the path loss threshold and are unmanageable access points thus have an allocated channel and access points 108, 101 and 102 have a path loss with access point 107 less than the path loss threshold and all have unallocated channels. Access point 101, corresponding to vertex 401, has a degree of saturation equal to one as well as access point 102. The allocation module will therefore allocate a channel first to access point 107.

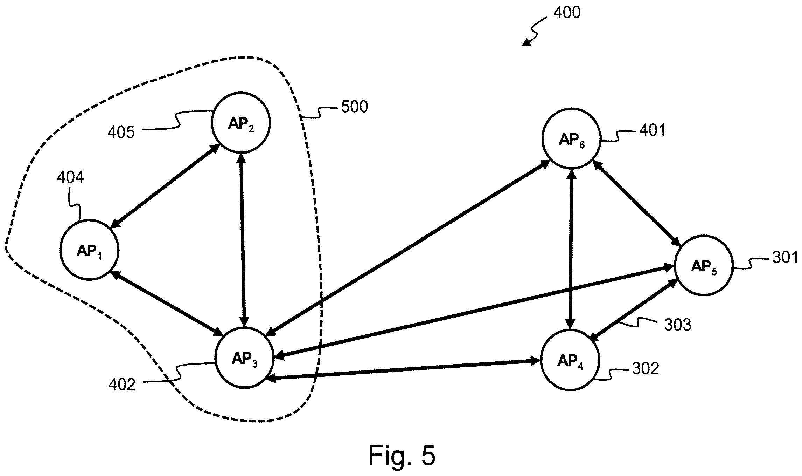

If access points have an equal number of saturation, a number of containing subsets is determined. The allocation module allocates a channel according to a decreasing number of containing subsets. In graph 400, now represented in Figure 5, another clique 500 is identified, hence access point 107, corresponding to vertex 402, belongs to subsets or cliques 403 and 500 so has a number of containing subsets equal to two, while both access point 101 and 102 have a number of containing subsets equal to one since they both belong to only subset or clique 403. Since, however, the latter have a same number of containing subsets, the allocation module is further configured to allocate channels first to manageable access points having an equal number of saturation and an equal number of containing subsets according to a decreasing number of interference.

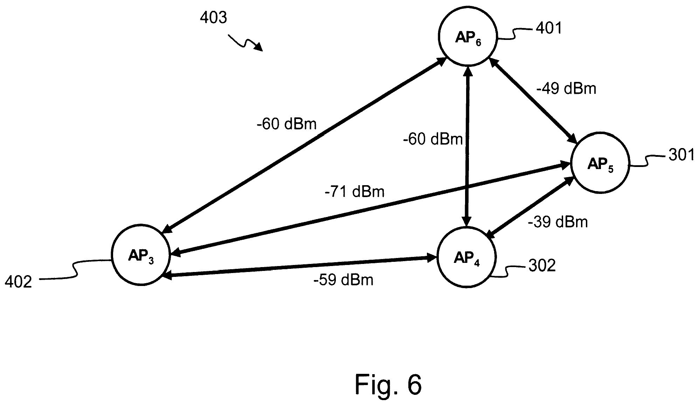

The decreasing number of interference is determined by considering the path losses determined by the path loss module 201 of the platform 200. The clique 403 of graph 400, now presented in Figure 6, has different path losses between all access points. Access point 101, corresponding to vertex 401 in the clique 403, has a total amount of interference of, for example, -69 dBm, while access point 102, corresponding to vertex 301, has a total amount of interference of -59 dBm. The total amount of interference is calculated from the weighted sum of all the path losses, less than the path loss threshold, terminating at an access point, even those path losses which do not belong to the clique, weighted by the amount of frequency spectrum overlap. Since access point 102 has a higher amount of interference, it is allocated a channel first by the allocation module 203. Next, a channel is allocated to access point 101. Thus, all manageable access points in subset or clique 403 are allocated a channel.

Next, the allocation module allocates channels to other manageable access points according to a decreasing size of subsets to which the other access points belong, wherein a size of a subset to which a certain access point belongs corresponds to the number of access points in that subset having a path loss less than the path loss threshold between each other. Thus, in the environment 100 with the manageable and unmanageable access points, a second subset corresponds to clique 500 in graph 400, the clique 500 having a size of a subset equal to three. The allocation module allocates channels to manageable access points in that subset. Since, however, access point 107 already is allocated a channel, the next manageable access point that is allocated a channel corresponds to access point 108.

The allocation module is, according to an embodiment, further configured to allocate a selected channel out of a range of allowed wireless channels to each of the access points, wherein a selected channel for a selected access point out of the first access points is the farthest from the other channels used by neighbouring access points, wherein the neighbouring access points are all access points with a path loss less than the path loss threshold. Thus in other words, if, for example, a channel is allocated to access point 107, the allocation module determines which channels are already used by other access points, namely 103 and 105, since they all have a path loss with access point 107 less than the path loss threshold. The channel allocated to access point 107 by the allocation module is a channel the farthest away of those used by the other access points. If all channels are already used by neighbouring access points, the allocation module selects, according to an embodiment, a channel for an access point which has the smallest amount of interference.

According to an embodiment of the disclosure, the platform 200 further comprises a feedback module 204, configured to calculate a SNIR for one or more possible positions of a STA of each access point and to derive therefrom an adapted path loss threshold. Thus, after the allocation of channels by the allocation module, the feedback module determines the coverage of the access points in the environment by taking into account the allocated channels of the manageable access points and the channels used by the unmanageable access points to operate. Based on SNIRs for STA of each access point, an adapted path loss threshold is calculated. If the adapted path loss threshold differs from the path loss threshold used by the threshold module, an updated largest subset may be determined and subsequently the allocation module may allocate channels to this updated largest subset. Hence, again the feedback module calculates an adapted path loss threshold such that the procedure is repeated until the path loss threshold used by the threshold module and the calculated adapted path loss threshold are identical.

According to an embodiment of the disclosure, the feedback module 204 is also configured to receive a SNIR of a STA of each access point such that a SNIR is measured instead of calculated. Hence, a calculation of an adapted path loss threshold is based on actual values of SNIRs.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A platform (200) for selecting wireless channels of wireless access points for which the wireless channels can be allocated by the platform (101, 102, 107, 108), manageable wireless access points, in an environment (100) with the manageable wireless access points (101, 102, 107, 108) and wireless access points for which wireless channels cannot be allocated by the platform, unmanageable wireless access points (103, 105), the platform (200) comprising:
- a path loss module (201) configured to determine path losses (104, 303) between each access point of the manageable and unmanageable wireless access points;
**CHARACTERIZED IN THAT** the platform further comprises:
- a threshold module (202) configured to determine a path loss threshold for which a largest subset (403) of access points has a path loss less than the path loss threshold between each access point of the largest subset (403) while the number of access points in the largest subset is greater than or equal to a predetermined value;
- an allocation module (203) configured to allocate channels to the manageable access points in the largest subset, first manageable access points, and, subsequently, to allocate channels to the manageable access points which are not in the largest subset, other manageable access points.

2. The platform according to claim 1 further comprising a feedback module (204) configured to calculate a signal-to-noise-plus-interference ratio, SNIR, for an associated station, STA, of each unmanageable access point and the allocated first and other manageable access points, and to derive therefrom an adapted path loss threshold; and wherein the threshold module is further configured to update the largest subset according to the adapted path loss threshold; and wherein the allocation module is further configured to update the allocation of the channels to the updated largest subset and respective other manageable access points.

3. The platform according to claim 2, wherein the feedback module (204) is further configured to determine an amount of interference generated by each access point of the manageable and unmanageable wireless access points, wherein the amount of interference is based on a position of each access point and on a signal-to-noise-plus-interference ratio, SNIR, for an associated STA of each access point, and wherein the adapted path loss threshold is based on the amount of interference.

4. The platform according to claim 2, wherein the feedback module (204) is further configured to receive a signal-to-noise-plus-interference ratio, SNIR, of an associated STA of each access point and to derive therefrom an adapted path loss threshold.

5. The platform according to claim 1, wherein the allocation module (203) is further configured to allocate channels to the first manageable access points in order of decreasing degree of saturation, wherein the degree of saturation of a certain access point corresponds to the amount of other access points having allocated channels and having a path loss less than the path loss threshold between the certain access point and each of the other access points.

6. The platform according to claim 5, wherein the allocation module (203) is further configured to allocate channels to access points of the first access points having an equal degree of saturation, according to a decreasing number of containing subsets, wherein the number of containing subsets of a certain access point corresponds to a number of subsets to which the certain access point belongs, wherein a subset corresponds to a set of access points having a path loss between each other less than the path loss threshold.

7. The platform according to claim 6, wherein the allocation module (203) is further configured to allocate channels to the first manageable access points having an equal degree of saturation and an equal number of containing subsets, according to a decreasing amount of interference between access points.

8. The platform according to claim 1, wherein the allocation module (203) is further configured to allocate channels to the other access points according to a decreasing size of subsets to which the other access points belong, wherein a size of a subset to which a certain access point belongs corresponds to the number of access points in that subset of access points having a path loss less than the path loss threshold between each other.

9. The platform according to claim 1, wherein the predetermined value corresponds to a number of allowed wireless channels or to a number of non-overlapping allowed wireless channels to be allocated.

10. The platform according to claim 5, wherein the allocation module (203) is further configured to allocate a selected channel out of a range of allowed wireless channels to each of the first access points, wherein a selected channel for a selected access point out of the first access points is the farthest from the other channels used by neighbouring access points, wherein the neighbouring access points are all access points with a path loss less than the path loss threshold.

11. The platform according to claim 5, wherein the allocation module (203) is further configured to allocate a selected channel out of a range of allowed wireless channels to an access point, wherein, when all allowed channels are used by neighbouring access points, the channel of a neighbouring access point with the smallest amount of interference is selected, wherein the neighbouring access points are all access points with a path loss less than the path loss threshold.

12. Method for selecting wireless channels of wireless access points for which the wireless channels can be allocated, manageable wireless access points, in an environment with the manageable wireless access points and wireless access points for which wireless channels cannot be allocated, unmanageable wireless access points, the method comprising:
- determining path losses between each access point of the manageable and unmanageable wireless access points;
**CHARACTERIZED IN THAT** the method further comprises the steps of:
- determining a path loss threshold for which a largest subset of access points has a path loss less than the path loss threshold between each access point of the largest subset while the number of access points in the largest subset is greater than or equal to a predetermined value;
- allocating channels to the manageable access points in the largest subset, first manageable access points, and, subsequently, allocating channels to the manageable access points which are not in the largest subset, other manageable access points.

13. A computer program product comprising computer-executable instructions for performing the method according to claim 12 when the program is run on a computer.

14. A computer readable storage medium comprising the computer program product according to claim 13.

15. A data processing system programmed for carrying out the method according to claim 12.

## Patentansprüche

1. Plattform (200) zum Auswählen von drahtlosen Kanälen von drahtlosen Zugangspunkten, für die die drahtlosen Kanäle durch die Plattform (101, 102, 107, 108) zugewiesen werden können, verwaltbaren drahtlosen Zugangspunkten, in einer Umgebung (100) mit den verwaltbaren drahtlosen Zugangspunkten (101, 102, 107, 108) und drahtlosen Zugangspunkten, für die drahtlose Kanäle nicht durch die Plattform zugewiesen werden können, nicht verwaltbaren drahtlosen Zugangspunkten (103, 105), wobei die Plattform (200) Folgendes umfasst:
- Pfadverlustmodul (201), das dafür ausgelegt ist, Pfadverluste (104, 303) zwischen jedem Zugangspunkt der verwaltbaren und nicht verwaltbaren drahtlosen Zugangspunkte zu bestimmen;
**dadurch gekennzeichnet, dass** die Plattform ferner umfasst:
- Schwellenwertmodul (202), das dafür ausgelegt ist, einen Pfadverlustschwellenwert zu bestimmen, für den eine größte Teilmenge (403) von Zugangspunkten einen Pfadverlust aufweist, der kleiner als der Pfadverlustschwellenwert zwischen jedem Zugangspunkt der größten Teilmenge (403) ist, während die Anzahl der Zugangspunkte in der größten Teilmenge größer oder gleich einem vorbestimmten Wert ist;
- Zuweisungsmodul (203), das dafür ausgelegt ist, den verwaltbaren Zugangspunkten in der größten Teilmenge, ersten verwaltbaren Zugangspunkten, Kanäle zuzuweisen und anschließend den verwaltbaren Zugangspunkten, die sich nicht in der größten Teilmenge befinden, anderen verwaltbaren Zugangspunkten, Kanäle zuzuweisen.

2. Plattform nach Anspruch 1, ferner umfassend ein Rückkopplungsmodul (204), das dafür ausgelegt ist, ein Signal-Rausch-plus-Interferenz-Verhältnis, SNIR, für eine zugeordnete Station, STA, jedes nicht verwaltbaren Zugangspunktes und der zugewiesenen ersten und anderen verwaltbaren Zugangspunkte zu berechnen und daraus einen angepassten Pfadverlustschwellenwert abzuleiten; und wobei das Schwellenwertmodul ferner dafür ausgelegt ist, die größte Teilmenge gemäß dem angepassten Pfadverlustschwellenwert zu aktualisieren; und wobei das Zuweisungsmodul ferner dafür ausgelegt ist, die Zuweisung der Kanäle zur aktualisierten größten Teilmenge und den jeweiligen anderen verwaltbaren Zugangspunkten zu aktualisieren.

3. Plattform nach Anspruch 2, wobei das Rückkopplungsmodul (204) ferner dafür ausgelegt ist, ein Ausmaß an Interferenz zu bestimmen, das von jedem Zugangspunkt der verwaltbaren und nicht verwaltbaren drahtlosen Zugangspunkte erzeugt wird, wobei das Ausmaß an Interferenz auf einer Position jedes Zugangspunkts und auf einem Signal-Rausch-plus-Interferenz-Verhältnis, SNIR, für eine zugeordnete STA jedes Zugangspunkts basiert, und wobei der angepasste Pfadverlustschwellenwert auf dem Ausmaß an Interferenz basiert.

4. Plattform nach Anspruch 2, wobei das Rückkopplungsmodul (204) ferner dafür ausgelegt ist, ein Signal-Rausch-plus-Interferenz-Verhältnis, SNIR, einer zugeordneten STA jedes Zugangspunktes zu empfangen und daraus einen angepassten Pfadverlustschwellenwert abzuleiten.

5. Plattform nach Anspruch 1, wobei das Zuweisungsmodul (203) ferner dafür ausgelegt ist, den ersten verwaltbaren Zugangspunkten Kanäle in der Reihenfolge eines abnehmenden Sättigungsgrades zuzuweisen, wobei der Sättigungsgrad eines spezifischen Zugangspunkts der Anzahl anderer Zugangspunkte entspricht, die zugewiesene Kanäle aufweisen und einen Pfadverlust aufweisen, der kleiner als der Pfadverlustschwellenwert zwischen dem spezifischen Zugangspunkt und jedem der anderen Zugangspunkte ist.

6. Plattform nach Anspruch 5, wobei das Zuweisungsmodul (203) ferner dafür ausgelegt ist, Kanäle an Zugangspunkte der ersten Zugangspunkte mit einem gleichen Sättigungsgrad gemäß einer abnehmenden Anzahl von enthaltenen Teilmengen zuzuweisen, wobei die Anzahl der enthaltenen Teilmengen eines spezifischen Zugangspunkts einer Anzahl von Teilmengen entspricht, zu denen der spezifische Zugangspunkt gehört, wobei eine Teilmenge einem Satz von Zugangspunkten entspricht, die einen Pfadverlust zwischen sich aufweisen, der kleiner als der Pfadverlustschwellenwert ist.

7. Plattform nach Anspruch 6, wobei das Zuweisungsmodul (203) ferner dafür ausgelegt ist, Kanäle an die ersten verwaltbaren Zugangspunkte zuzuweisen, die einen gleichen Sättigungsgrad und eine gleiche Anzahl von enthaltenden Teilmengen aufweisen, gemäß einem abnehmenden Ausmaß an Interferenz zwischen Zugangspunkten.

8. Plattform nach Anspruch 1, wobei das Zuweisungsmodul (203) ferner dafür ausgelegt ist, den anderen Zugangspunkten Kanäle entsprechend einer abnehmenden Größe von Teilmengen zuzweisen, zu denen die anderen Zugangspunkte gehören, wobei eine Größe einer Teilmenge, zu der ein spezifischer Zugangspunkt gehört, der Anzahl der Zugangspunkte in dieser Teilmenge von Zugangspunkten entspricht, die einen Pfadverlust aufweisen, der kleiner als der Pfadverlustschwellenwert untereinander ist.

9. Plattform nach Anspruch 1, wobei der vorbestimmte Wert einer Anzahl von zulässigen drahtlosen Kanälen oder einer Anzahl von nicht überlappenden zulässigen drahtlosen Kanälen entspricht, die zugewiesen werden sollen.

10. Plattform nach Anspruch 5, wobei das Zuweisungsmodul (203) ferner dafür ausgelegt ist, jedem der ersten Zugangspunkte einen ausgewählten Kanal aus einem Bereich zulässiger drahtloser Kanäle zuzuweisen, wobei ein ausgewählter Kanal für einen ausgewählten Zugangspunkt aus den ersten Zugangspunkten am weitesten von den anderen Kanälen entfernt ist, die von benachbarten Zugangspunkten verwendet werden, wobei die benachbarten Zugangspunkte sämtlich Zugangspunkte mit einem Pfadverlust von weniger als dem Pfadverlustschwellenwert sind.

11. Plattform nach Anspruch 5, wobei das Zuweisungsmodul (203) ferner dafür ausgelegt ist, einen ausgewählten Kanal aus einem Bereich zulässiger drahtloser Kanäle einem Zugangspunkt zuzuweisen, wobei, wenn alle zulässigen Kanäle von benachbarten Zugangspunkten verwendet werden, der Kanal eines benachbarten Zugangspunkts mit der geringsten Interferenz ausgewählt wird, wobei die benachbarten Zugangspunkte sämtlich Zugangspunkte mit einem Pfadverlust sind, der kleiner als der Pfadverlustschwellenwert ist.

12. Verfahren zum Auswählen von drahtlosen Kanälen von drahtlosen Zugangspunkten, denen die drahtlosen Kanäle zugewiesen werden können, verwaltbaren drahtlosen Zugangspunkten, in einer Umgebung mit den verwaltbaren drahtlosen Zugangspunkten und drahtlosen Zugangspunkten, denen drahtlose Kanäle nicht zugewiesen werden können, nicht verwaltbaren drahtlosen Zugangspunkten, wobei das Verfahren umfasst:
- Bestimmen von Pfadverlusten zwischen jedem Zugangspunkt der verwaltbaren und nicht verwaltbaren drahtlosen Zugangspunkte;
**dadurch gekennzeichnet, dass** das Verfahren ferner die folgenden Schritte umfasst:
- Bestimmen eines Pfadverlustschwellenwerts, für den eine größte Teilmenge von Zugangspunkten einen Pfadverlust aufweist, der kleiner als der Pfadverlustschwellenwert zwischen jedem Zugangspunkt der größten Teilmenge ist, während die Anzahl der Zugangspunkte in der größten Teilmenge größer oder gleich einem vorbestimmten Wert ist;
- Zuweisen von Kanälen zu den verwaltbaren Zugangspunkten in der größten Teilmenge, ersten verwaltbaren Zugangspunkten, und anschließendes Zuweisen von Kanälen zu den verwaltbaren Zugangspunkten, die sich nicht in der größten Teilmenge befinden, anderen verwaltbaren Zugangspunkten.

13. Computerprogrammprodukt, umfassend computerausführbare Anweisungen zum Ausführen des Verfahrens nach Anspruch 12, wenn das Programm auf einem Computer ausgeführt wird.

14. Computerlesbares Speichermedium, umfassend das Computerprogrammprodukt nach Anspruch 13.

15. Datenverarbeitungssystem, das zur Durchführung des Verfahrens nach Anspruch 12 programmiert ist.

## Revendications

1. Plateforme (200) de sélection de canaux sans fil de points d'accès sans fil pour lesquels les canaux sans fil peuvent être affectés par la plateforme, points d'accès sans fil gérables (101, 102, 107, 108), dans un environnement (100) avec les points d'accès sans fil gérables (101, 102, 107, 108), et de points d'accès sans fil pour lesquels les canaux sans fil ne peuvent pas être affectés par la plateforme, points d'accès sans fil non gérables (103, 105), la plateforme (200) comprenant :
un module d'affaiblissement de propagation (201), configuré pour déterminer des affaiblissements de propagation (104, 303) entre chaque point d'accès des points d'accès sans fil gérables et non gérables ;
la plateforme étant **CARACTÉRISÉE EN CE QU'**elle comprend en outre :
un module de seuil (202), configuré pour déterminer un seuil d'affaiblissement de propagation pour lequel un sous-ensemble le plus grand (403) de points d'accès a un affaiblissement de propagation inférieur au seuil d'affaiblissement de propagation entre chaque point d'accès du sous-ensemble le plus grand (403), le nombre de points d'accès dans le sous-ensemble le plus grand étant supérieur ou égal à une valeur prédéterminée ;
un module d'affectation (203), configuré pour affecter des canaux aux points d'accès gérables dans le sous-ensemble le plus grand, premiers points d'accès gérables, puis pour affecter des canaux aux points d'accès gérables qui ne sont pas dans le sous-ensemble le plus grand, autres points d'accès gérables.

2. Plateforme selon la revendication 1, comprenant en outre un module de retour (204) configuré pour calculer un rapport signal-bruit plus brouillage, SNIR, pour une station, STA, associée de chaque point d'accès non gérable et de chacun des premiers et des autres points d'accès gérables affectés, et pour obtenir à partir de celui-ci un seuil d'affaiblissement de propagation adapté ; le module de seuil étant en outre configuré pour mettre à jour le sous-ensemble le plus grand selon le seuil d'affaiblissement de propagation adapté ; et le module d'affectation étant en outre configuré pour mettre à jour l'affectation des canaux vers le sous-ensemble le plus grand mis à jour et les autres points d'accès gérables respectifs.

3. Plateforme selon la revendication 2, dans laquelle le module de retour (204) est en outre configuré pour déterminer une ampleur de brouillage généré par chaque point d'accès des points d'accès sans fil gérables et non gérables, l'ampleur de brouillage étant basée sur une position de chaque point d'accès et sur un rapport signal-bruit plus brouillage, SNIR, pour une STA associée de chaque point d'accès, et le seuil d'affaiblissement de propagation adapté étant basé sur l'ampleur de brouillage.

4. Plateforme selon la revendication 2, dans laquelle le module de retour (204) est en outre configuré pour recevoir un rapport signal-bruit plus brouillage, SNIR, d'une STA associée de chaque point d'accès, et pour obtenir à partir de celui-ci un seuil d'affaiblissement de propagation adapté.

5. Plateforme selon la revendication 1, dans laquelle le module d'affectation (203) est en outre configuré pour affecter des canaux aux premiers points d'accès gérables afin de diminuer un degré de saturation, le degré de saturation d'un point d'accès donné correspondant au nombre d'autres points d'accès ayant des canaux affectés et ayant un affaiblissement de propagation inférieur au seuil d'affaiblissement de propagation entre le point d'accès donné et chacun des autres points d'accès.

6. Plateforme selon la revendication 5, dans laquelle le module d'affectation (203) est en outre configuré pour affecter des canaux à des points d'accès des premiers points d'accès ayant un degré de saturation identique, selon un nombre décroissant de sous-ensembles contenants, le nombre de sous-ensembles contenants d'un point d'accès donné correspondant à un nombre de sous-ensembles auxquels appartient le point d'accès donné, un sous-ensemble correspondant à un ensemble de points d'accès ayant un affaiblissement de propagation entre eux inférieur au seuil d'affaiblissement de propagation.

7. Plateforme selon la revendication 6, dans laquelle le module d'affectation (203) est en outre configuré pour affecter des canaux aux premiers points d'accès gérables ayant un degré de saturation identique et un nombre identique de sous-ensembles contenants, selon une ampleur décroissante de brouillage entre des points d'accès.

8. Plateforme selon la revendication 1, dans laquelle le module d'affectation (203) est en outre configuré pour affecter des canaux aux autres points d'accès selon une taille décroissante de sous-ensembles auxquels appartiennent les autres points d'accès, une taille d'un sous-ensemble auquel appartient un point d'accès donné correspondant au nombre de points d'accès dans ce sous-ensemble de points d'accès ayant un affaiblissement de propagation inférieur au seuil d'affaiblissement de propagation entre eux.

9. Plateforme selon la revendication 1, dans laquelle la valeur prédéterminée correspond à un nombre de canaux sans fil autorisés ou à un nombre de canaux sans fil autorisés non chevauchants à affecter.

10. Plateforme selon la revendication 5, dans laquelle le module d'affectation (203) est en outre configuré pour affecter un canal sélectionné en dehors d'une plage de canaux sans fil autorisés à chacun des premiers points d'accès, un canal sélectionné pour un point d'accès sélectionné différent des premiers points d'accès étant le plus éloigné des autres canaux utilisés par des points d'accès voisins, les points d'accès voisins étant tous les points d'accès avec un affaiblissement de propagation inférieur au seuil d'affaiblissement de propagation.

11. Plateforme selon la revendication 5, dans laquelle le module d'affectation (203) est en outre configuré pour affecter un canal sélectionné en dehors d'une plage de canaux sans fil autorisés à un point d'accès, le canal d'un point d'accès voisin avec l'ampleur minimale de brouillage étant utilisé quand tous les canaux autorisés sont utilisés par des points d'accès voisins, les points d'accès voisins étant tous les points d'accès avec un affaiblissement de propagation inférieur au seuil d'affaiblissement de propagation.

12. Procédé de sélection de canaux sans fil de points d'accès sans fil pour lesquels les canaux sans fil peuvent être affectés, points d'accès sans fil gérables, dans un environnement avec les points d'accès sans fil gérables, et de points d'accès sans fil pour lesquels les canaux sans fil ne peuvent pas être affectés, points d'accès sans fil non gérables, le procédé comprenant :
la détermination des affaiblissements de propagation entre chaque point d'accès des points d'accès sans fil gérables et non gérables ;
le procédé étant **CARACTÉRISÉ EN CE QU'**il comprend en outre les étapes comprenant :
la détermination d'un seuil d'affaiblissement de propagation pour lequel un sous-ensemble le plus grand de points d'accès a un affaiblissement de propagation inférieur au seuil d'affaiblissement de propagation entre chaque point d'accès du sous-ensemble le plus grand, le nombre de points d'accès dans le sous-ensemble le plus grand étant supérieur ou égal à une valeur prédéterminée ;
l'affectation de canaux aux points d'accès gérables dans le sous-ensemble le plus grand, premiers points d'accès gérables, puis l'affectation de canaux aux points d'accès gérables qui ne sont pas dans le sous-ensemble le plus grand, autres points d'accès gérables.

13. Produit de programme informatique, comprenant des instructions exécutables par ordinateur pour réaliser le procédé selon la revendication 12 quand le programme est exécuté sur un ordinateur.

14. Support de stockage lisible par ordinateur, comprenant le produit de programme informatique selon la revendication 13.

15. Système de traitement de données, programmé pour réaliser le procédé selon la revendication 12.
